(19) Europäisches Patentamt
European Patent Office
Office européen des brevets

(11) **EP 3 305 829 A1**

(12) **EUROPÄISCHE PATENTANMELDUNG**

(43) Veröffentlichungstag:
**11.04.2018 Patentblatt 2018/15**

(51) Int Cl.:
***C08G 69/18*** *(2006.01)*

(21) Anmeldenummer: **16192727.2**

(22) Anmeldetag: **07.10.2016**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(71) Anmelder: **LANXESS Deutschland GmbH
50569 Köln (DE)**

(72) Erfinder:
- **Witt, Michael
  95488 Eckersdorf (DE)**
- **Steinhilber, Dirk
  41470 Neuss (DE)**
- **Fuchs, Dominic
  50733 Köln (DE)**
- **Frank, Michaela
  51381 Leverkusen (DE)**

(54) **POLYMERISIERBARE ZUSAMMENSETZUNG**

(57) Polymerisierbare Zusammensetzung, enthaltend

a) ein zyklisches Amid aus einer Mischung von Laurinlactam und Caprolactam, wobei die Menge an Laurinlactam 10 bis 35 Gew.-%, bezogen auf die Gesamtmenge an zyklischem Amid beträgt,

b) wenigstens einen Aktivator, sowie

c) wenigstens einen Katalysator zur Polymerisation der zyklischen Amide.

**EP 3 305 829 A1**

**Beschreibung**

Die vorliegende Erfindung betrifft eine polymerisierbare Zusammensetzung, enthaltend als zyklische Amide eine spezielle Mischung an Caprolactam und Laurinlactam, ihre Herstellung und ihre Verwendung zur Herstellung von Polyamid, insbesondere einem faserverstärkten Verbundwerkstoff mit Polyamidmatrix dadurch ausgezeichnet, dass bei der Polymerisation nur ein geringer Volumenschrumpf auftritt.

Die anionische Polymerisation von Lactamen ermöglicht eine sehr rasche Umwandlung einer aktivierten Lactamschmelze zu einem Polyamid. Polyamide gehören zur Klasse der Thermoplasten und zeigen damit andere Eigenschaften als andere kommerzielle Vergussmassen auf Basis Epoxidharzen, Phenolharzen oder Polyurethansystemen, die entweder zu Duromeren oder aber zu vernetzten Polymeren führen.

Thermoplaste lassen sich am Ende des Lebenszyklus eines Bauteils besonders einfach rezyklieren.

Es ist bekannt, dass zur Herstellung von Guss-Polyamiden üblicherweise ein Lactam zusammen mit mindestens einem Katalysator und mindestens einem Aktivator vermengt wird und die derart aktivierte Caprolactamschmelze im Anschluss polymerisiert werden kann.

Erst der Aktivator erlaubt es, die Polymerisationstemperatur so weit herabzusenken, dass die Polymerisation für technische Prozesse interessant wird und innerhalb weniger Minuten ein auspolymerisierter Polymer- bzw. Verbundkörper aus der Form entnommen werden kann.

In der Literatur ist die anionische Polymerisation sowohl von Caprolactam als auch von Laurinlactam zur drucklosen Herstellung von dickwandigen Teilen beschrieben, siehe Sächtling Kunststoff Taschenbuch, ISBN 978-3-446-43442-4, 31. Auflage, 2013, Seite 554.

Wird aber abweichend von der klassischen Guss-Polymerisation nicht in offenen Formen polymerisiert und das durch anionische Lactampolymerisation hergestellte Gussteil nicht durch mechanische Nachbearbeitung wie Sägen und Fräsen auf das beabsichtigte Maß gebracht, so stellt der bei der Umwandlung der aktivierten Lactamschmelze zum Polymerkörper resultierende Volumenschrumpf ein großes Problem dar. Neben abweichenden Dimensionen entstehen bei der Polymerisation in gasdicht schließenden Formen oft Lunker im Polymer, welche rein visuell den Eindruck einer verminderten Produktqualität erwecken, die aber auch die mechanischen Eigenschaften, beispielsweise die Zugfestigkeit und die Schlagzähigkeit, deutlich herabsetzen.

In der 30. Ausgabe des o.a. Sächtling Kunststoff Taschenbuches (ISBN 978-3-446-40352-9) wird auf Seite 538 der Volumenschrumpf von Polyamiden aus Caprolactam bzw. Laurinlactam mit jeweils etwa 15 % angegeben. Besonders gravierend ist dieser Nachteil bei umgossenen Bauteilen, wie Kabeln oder Motorteilen, da es leicht zu Spannungen oder gar zu Rissen bei Belastungen kommen kann. Entsprechend ist das Anwendungsspektrum einer reinen Guss-PA6- bzw. Guss-PA12-Polymerisation eingeschränkt.

Auch beim RIM PA 6-Verfahren mit endlos-Faserverstärkung stellt der Volumenschrumpf der polymerisierenden Lactamschmelze eine Herausforderung dar. So kann es bei der Polymerisation in abgeschlossenen Kavitäten passieren, dass sich durch den Volumenschrumpf die Matrix hinter die Faseroberfläche der zuvor in die Kavität eingelegten textilen-Verstärkung zurückzieht und damit optisch minderwertige Bauteile entstehen. Bei einem RIM PA 6-Verfahren, wobei RIM für "Reaction Injection Moulding" steht, wird ein textiles Verstärkungsgewebe mit der niedrigviskosen, aktivierten Lactamschmelze zunächst getränkt und dann das Lactam polymerisiert; es entsteht direkt oder "in-situ" ein Verbundkunststoff-Teil. Das RIM PA-Verfahren wird in seinen Grundzügen von P. Wagner in Kunststoffe 73, 10 (1983), Seiten 588 - 590, beschrieben.

Bei der Betrachtung des Volumenschrumpfes sind insgesamt drei Effekte zu beachten, was hier am Beispiel der Polymerisation von Caprolactam erklärt wird:

Caprolactam wird im allgemeinen als Schuppenware für die Guss- und RIM Polymerisation eingesetzt.

Zur anionischen Polymerisation wird das bei Raumtemperatur feste Caprolactam auf seine Schmelztemperatur von 69°C gebracht und dann weiter auf eine Polymerisationstemperatur von ca. 150°C erwärmt. Durch die Temperaturerhöhung der Schmelze von 69 auf 150°C reduziert sich die Dichte der Schmelze.

Bei der Polymerisation sind insbesondere zwei Effekte zu beachten, die beide eine Volumenkontraktion zur Folge haben: Die Polymerisation und die Kristallisation. Es entsteht bei der Polymerisationstemperatur direkt das fertige Polymer.

Bei der Abkühlung auf Raumtemperatur wird das Polymer dann durch den Polymercharakteristischen Ausdehnungskoeffizienten in der Dichte weiter zunehmen.

In der Literatur wird i.a. der Volumenschrumpf auf alle drei Faktoren bezogen, also auf den Schrumpf, den die heiße, flüssige Lactamschmelze durch Polymerisation und Kristallisation erfährt und zusätzlich auf die Volumenreduktion induziert durch die Abkühlung des Polymers auf Raumtemperatur. Der Volumenschrumpf geht grundsätzlich einher mit einer proportionalen Erhöhung der Dichte und wird wie folgt bestimmt:

Volumenschrumpf in Prozent = (1 – Dichte der polymerisierbaren Zusammensetzung bei 150 °C/Dichte des daraus erhaltenen Polymers bei Raumtemperatur, 23°C) x100.

Für viele Anwendungen sind insbesondere die beiden ersten Faktoren, die Volumenreduktion durch Polymerisation und Kristallisation für die spätere Qualität des Bauteils entscheidend.

Wird beispielsweise eine Kavität mit aktivierter Caprolactamschmelze bei der Polymerisationstemperatur gefüllt, dann gasdicht verschlossen, so hat der durch Polymerisation und Kristallisation verursachte Volumenschrumpf zur Folge, dass entweder Hohlräume oder aber fein verteilte Gasblasen (Lunker) entstehen, die zu einem optisch und mechanisch minderwertigen Bauteil führen.

Wird das Bauteil anschließend direkt bei der Polymerisationstemperatur entformt und erst im Anschluss abgekühlt, so ändern sich zwar die Dimensionen des Bauteils, Lunker entstehen aber beim Abkühlen nicht mehr.

Stellung der Aufgabe:

Es bestand somit Bedarf an einer polymerisierbaren Zusammensetzung zur Herstellung von Polyamid, die insbesondere direkt im Werkzeug innerhalb weniger Minuten auf die späteren Endkonturen polymerisiert werden kann, die ohne zusätzliche Maßnahmen geringe Restmonomergehalte ermöglicht und die vor allem bei der Polymerisation einen deutlich geringeren Volumenschrumpf zeigt und damit die Nachteile des Standes der Technik überwindet.

Lösung der Aufgabe:

Überraschenderweise wurde eine polymerisierbare Zusammensetzung gefunden, enthaltend

a) ein zyklisches Amid enthaltend eine Mischung von Lauryllactam und Caprolactam, wobei die Menge an Laurinlactam 10 bis 35 Gew.-%, insbesondere 20 bis 35 Gew.-%, bezogen auf die Gesamtmenge an zyklischem Amid beträgt

b) wenigstens einen Aktivator, sowie

c) wenigstens einen Katalysator zur anionischen Polymerisation der zyklischen Amide.

Der Volumenschrumpf bei der Polymerisation der erfindungsgemäßen Zusammensetzung ist im Vergleich zu reinem Caprolactam deutlich reduziert.

Komponente a)

Als zyklische Amide, wird dabei eine Mischung, enthaltend Caprolactam und Laurinlactam eingesetzt, wobei die zyklischen Amide in der erfindungsgemäßen polymerisierbaren Zusammensetzung, vorzugsweise zu mehr als 95 Gew.-%, insbesondere zu mehr als 98 Gew.-% aus Caprolactam und Laurinlactam bestehen. Mischungen verschiedener Lactame für Klebstoffanwendungen sind bereits aus DE3730504 bekannt.

Komponente b)

Bei dem Aktivator der Komponente b) handelt es sich vorzugsweise um solche Aktivatoren auf Basis geblockter aliphatischer Isocyante, insbesondere Disocyanate, wie Isophorondiisocyanat (IPDI) oder insbesondere solche der Formel $OCN-(CH_2)_{4-20}-NCO$ wie Butylendiisocyanat, Hexamethylendiisocyanat (HDI), Octamethylendiisocyanat, Decamethylendiisocyanat, Undecamethylendiisocyanat oder Dodecamethylen-diisocyanat. Besonders bevorzugt ist geblocktes Hexamethylendiisocyanat (HDI).

Als Blockierungmittel der Isocyanate der Komponente b) ist Lactam bevorzugt, insbesondere Caprolactamblockiertes Dsocyanat. Dabei können grundsätzlich auch verschieden blockierte Polyisocyanate in einer Mischung zum Einsatz kommen.

Besonders bevorzugt ist Caprolactam geblocktes HDI, N,N'-Hexan-1,6-diylbis(hexahydro-2-oxo-1H-azepine-1-carboxamid), CAS Nr.: 5888-87-9.

Das Massenverhältnis von den zyklischen Amiden der Komponente a) zu dem geblockten Isocyanat der Komponente b) kann in weiten Grenzen variiert werden und beträgt in der Regel 1 : 1 bis 10000 : 1, bevorzugt 5 : 1 bis 2000 : 1, besonders bevorzugt 20 : 1 bis 1000 : 1.

Komponente c)

Der Katalysator c) zur Polymerisation, insbesondere anionischen Polymerisation der zyklischen Amide wird vorzugsweise ausgewählt aus der Gruppe, bestehend aus Natriumcaprolactamat, Kaliumcaprolactamat, Bromid-Magnesiumcaprolactamat, Chlorid-Magnesium-caprolactamat, Magnesium-bis-Capro-lactamat, Natriumhydrid, Natrium, Natriumhydroxid, Natriummethanolat, Natriumethanolat, Natriumpropanolat, Natriumbutanolat, Kaliumhydrid, Kaliumhydroxid, Kaliummethanolat, Kaliumethanolat, Kaliumpropanolat und Kaliumbutanolat, bevorzugt aus der Gruppe bestehend aus Natriumhydrid, Natrium und Natriumcaprolactamat, besonders bevorzugt Natriumcaprolactamat.

Das Molverhältnis der zyklischen Amide a) zu Katalysator c) kann in weiten Grenzen variiert werden, es beträgt in der Regel 1 : 1 bis 10000 : 1, bevorzugt 5 : 1 bis 1000 : 1, besonders bevorzugt 1 : 1 bis 500 : 1.

Bevorzugt enthält die erfindungsgemäße polymerisierbare Zusammensetzung 50 bis 100 Gew.% der Komponenten a) bis c), vorzugsweise 80 bis 100 Gew.-%, insbesondere 90 bis 100 %, besonders bevorzugt 95 bis 100%, bezogen auf das Gesamtgewicht der Zusammensetzung.

Besonders bevorzugt enthält die erfindungsgemäße Zusammensetzung einen Aktivator der Komponente b) auf Basis eines mit Caprolactam geblocktem Hexamethylendiisocyant und als einen Katalysator der Komponente b) Natriumcaprolactamat.

**Weitere Zusätze**

Die erfindungsgemäße polymerisierbare Zusammensetzung kann ein oder mehrere Polymere enthalten, wobei das Polymer prinzipiell ausgewählt sein kann aus Polymeren, die bei der Polymerisation der erfindungsgemäß polymerisierbaren Zusammensetzung erhalten werden, davon verschiedenen Polymeren und Polymerblends.

In einer geeigneten Ausführungsform kann die erfindungsgemäße polymerisierbare Zusammensetzung auch Füllstoff enthalten. Füllstoffe, insbesondere partikuläre Füllstoffe können eine weite Bandbreite von Teilchengrößen aufweisen, die von staubförmigen bis grobkörnigen Partikeln reichen. Als Füllmaterial kommen organische oder anorganische Füll- und/oder Faserstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Graphene, Glaspartikel, z.B. Glaskugeln, nanoskalige Füllstoffe, wie Kohlenstoff-Nanoröhren, Carbon black, nanoskalige Schichtsilikate, nanoskaliges Aluminiumoxid ($Al_2O_3$) und nanoskaliges Titandioxid ($TiO_2$) eingesetzt werden. Diese Füllstoffe reduzieren ebenfalls den bei der Polymerisation resultierenden Volumenschrumpf. Durch Kombination des erfindungsgemäßen Effektes und der Verwendung von Füllstoffen lässt sich dieser Schrumpf weiter reduzieren.

Bevorzugt werden Füllstoffe in einer Menge von 0 bis 90 Gew.-%, insbesondere von 0 bis 50 Gew.-%, bezogen auf die erfindungsgemäße polymerisierbare Zusammensetzung eingesetzt.

Weiterhin können ein oder mehrere Faserstoffe zum Einsatz kommen. Diese sind vorzugsweise ausgewählt aus bekannten anorganischen Verstärkungsfasern, wie Borfasern, Glasfasern, Kohlenstofffasern, Kieselsäurefasern, Keramikfasern und Basaltfasern, organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Glasfasern, Kohlenstofffasern, Aramidfasern, Borfasern oder Metallfasern. Die genannten Fasern werden bevorzugt als Endlosfasern, beispielsweise in Form von Tapes, Gelegen, Geweben oder Gestricken eingesetzt. Es ist auch möglich, eine nicht geordnete Faserablage, beispielsweise in Form von Matten, Vliesen oder auch Schnittfasern unterschiedlicher Faserlänge, insbesondere von 0,1 mm bis mehrere cm Länge, vorzugsweise bis 5 cm Länge einzusetzen.

Der Einsatz dieser Fasermaterialien erfolgt jedoch vorzugsweise erst in der Anwendung der erfindungsgemäßen polymerisierbaren Zusammensetzung zur Herstellung eines ebenfalls erfindungsgemäßen faserverstärkten Verbundwerkstoffs. Auch in diesem Fall wird der Schrumpf durch die Fasern, bezogen auf das Gesamtvolumen, weiter reduziert.

In einer bevorzugten Ausführungsform kann die erfindungsgemäße polymerisierbare Zusammensetzung einen oder mehrere weitere Zusatzstoffe enthalten. Als Zusatzstoffe können beispielsweise Stabilisatoren, wie Kupfersalze, Farbstoffe, Antistatika, Trennmittel, Antioxidantien, Lichtstabilisatoren, PVC-Stabilisatoren, Gleitmittel, Trennmittel, Treibmittel, und Kombinationen daraus zugesetzt werden. Bevorzugt sind diese Zusatzstoffe in einer Menge von 0 bis 5 Gew.-%, bevorzugt von 0 bis 4 Gew.-%, besonders bevorzugt von 0 bis 3,5 Gew.-%, bezogen auf das Gesamtgewicht der polymerisierbaren Zusammensetzung. Werden als Zusatzstoffe Flammschutzmittel oder Schlagzähigkeitsverbesserer eingesetzt, so können diese Zusatzstoffe von 0 bis 45 Gew.%, bezogen auf das Gesamtgewicht der polymerisierbaren Zusammensetzung, eingesetzt werden.

Die polymerisierbare Zusammensetzung kann wenigstens einen Zusatzstoff enthalten, vorzugsweise in einer Menge von wenigstens 0,01 Gew.-%, bezogen auf das Gesamtgewicht der polymerisierbaren Zusammensetzung, besonders bevorzugt von wenigstens 0,1 Gew.-%, bezogen auf das Gesamtgewicht der polymerisierbaren Zusammensetzung, insbesondere von wenigstens 0,5 Gew.-%, bezogen auf das Gesamtgewicht der polymerisierbaren Zusammensetzung.

Bevorzugt enthält die erfindungsgemäß polymerisierbare Zusammensetzung als Zusatzstoff wenigstens einen Schlagzähigkeitsverbesserer. Wird als Schlagzähigkeitsverbesserer eine polymere Verbindung eingesetzt, so wird diese den zuvor genannten Polymeren zugerechnet. Insbesondere wird als Schlagzähigkeitsverbesserer ein Polydien-Polymer (z. B. Polybutadien, Polyisopren) eingesetzt. Diese enthalten bevorzugt Anhydrid- und/oder Epoxidgruppen. Das Polydien-Polymer weist insbesondere eine Glasübergangstemperatur unter 0 °C, bevorzugt unter -10 °C, besonders bevorzugt unter -20 °C auf. Das Polydien-Polymer kann auf der Basis eines Polydien-Copolymers mit Polyacrylaten, Polyethylenacrylaten und/oder Polysiloxanen basieren und mittels der gängigen Verfahren hergestellt werden (z.B. Emulsionspolymerisation, Suspensionspolymerisation, Lösungs-polymerisation, Gasphasenpolymerisation).

Übliche Schlagzähigkeitsverbesserer und Kaltschlagzähigkeitsverbesserer basieren auch auf funktionalisierten Polyetherglykolen, beispielsweise dem von der Firma Rhein Chemie Rheinau GmbH angebotenem Addonyl® 8073 und auf Triaminen, beispielsweise auf Polyoxypropylentriaminen, wie sie von der gleichen Firma unter der Bezeichnung Addonyl® 8112 angeboten werden.

Herstellung der polymerisierbaren Zusammensetzung

Die Erfindung betrifft weiterhin ein Verfahren zur Herstellung der polymerisierbaren Zusammensetzung, dadurch gekennzeichnet, dass man die Mischung der zyklischen Amide der Komponente a) mit wenigstens einem geblockten Polyisocyanat der Komponente b) und wenigstens einen Katalysator der Komponente c) in Kontakt bringt.

Vorzugsweise werden zur Bereitstellung der polymerisierbaren Zusammensetzung die Komponenten b) und c) zunächst unabhängig von einander in a) gemischt. Erst zu einem späteren Zeitpunkt, i.A. direkt vor der anionischen Polymerisation, werden dann diese Einzelmischungen miteinander gemischt. Das Verfahren ist daher vorzugsweise dadurch gekennzeichnet, dass man eine Aktivatormischung enthaltend zyklische Amide der Komponente a) und wenigstens einen Aktivator der Komponente b) mit einer Katalysatormischung, enthaltend zyklische Amide der Komponente a) und wenigstens einen Katalysator der Komponente c) in Kontakt bringt.

Dabei kann das Mischen in fester Form der jeweiligen Einzelkomponenten a) und b) sowie von a) und c) erfolgen oder in flüssiger Form.

Zum Überführen der flüssigen Mischphase der Komponenten a), b) und c), also der aktivierten Lactamschmelze, wird vorzugsweise eine Temperatur gewählt, die gleich oder grösser ist als der Schmelzpunkt der resultierenden Mischung, insbesondere 70 bis 160°C.

Das Vermischen der Komponenten kann diskontinuierlich oder kontinuierlich erfolgen. Geeignete Vorrichtungen zum Vermischen der Komponenten sind dem Fachmann bekannt. Zum diskontinuierlichen Vermischen werden vorzugsweise Rührkessel oder Kneter verwendet. Kontinuierliche Mischvorgänge erfolgen vorzugsweise im Extruder, sowie auch durch statische Mischelemente, welche in einem Mischkopf oder direkt mit im Werkzeug implementiert sind, oder aber durch Vermischen mittels Gegenstrominjektion. Die Mischvorrichtung ist vorzugsweise temperierbar.

Sowohl der oder die Aktivatoren als auch der oder die Katalysatoren können auch in Form von fertigen Handelsprodukten eingesetzt werden.

Als möglicher Aktivator der Komponente b) gibt es Caprolactam-geblocktes Hexamethylendiisocyanat, beispielsweise kommerziell unter der Bezeichnung Brüggolen® C20 von der Firma Brüggemann oder Addonyl® 8120 von der Firma Rhein Chemie Rheinau GmbH.

Als möglicher Katalysator der Komponente c) kann eine Lösung von Natriumcaprolactamat in Caprolactam eingesetzt werden, z.B. Brüggolen© C10 der Firma Brüggemann, das 17 bis 19 Gew.-% Natriumcaprolactamat in Caprolactam bzw. Addonyl KAT NL der Firma Rhein Chemie Rheinau GmbH, das 18,5 Gew.-% Natriumcaprolactamat in Caprolactam enthält. Als Katalysator c) eignet sich ebenfalls insbesondere Bromid-Magnesiumcaprolactamat, z. B. Brüggolen® C1 der Firma Brüggemann.

Die polymerisierbare Zusammensetzung wird vorzugsweise zügig in eine zur Auspolymerisation vorgesehene Kavität überführt.

Weiterhin ist es möglich, sogenannte Instant-Mischungen aus den Komponenten a) und b) und a) und c) zu bereiten. Diese Instantmischungen können dann im gewünschten Verhältnis kombiniert werden, um die erfindungsgemäße polymerisierbare Zusammensetzung zur Herstellung von Polymerisaten mit geringerem Schrumpf zu verwenden.

Die Zeit, die die erfindungsgemäße Zusammensetzung bei Erreichen der Polymerisationstemperatur bis zur Verfestigung benötigt, beträgt vorzugsweise weniger als 10 Minuten, bevorzugt weniger als 5 Minuten, insbesondere weniger als 1 Minute.

Entsprechend sollte die polymerisierbare Zusammensetzung schnell verarbeitet werden.

**Herstellung einer Polymermatrix, insbesondere eines Faserverbundwerkstoffs**

Die Erfindung betrifft weiterhin ein Verfahren zur Herstellung einer Polymermatrix, dadurch gekennzeichnet, dass man die polymerisierbare Zusammensetzung bei einer Temperatur von 120 bis 200 °C, vorzugsweise bei 120 bis 180 °C, insbesondere bei 140 bis 160 °C behandelt.

Eine Kavität, beispielsweise enthaltend die elektrischen, stromführenden Komponenten eines Kabelstranges oder eines Elektromotors, wird mit der erfindungsgemäßen polymerisierbare Zusammensetzung vergossen und ggf. durch Temperaturerhöhung auspolymerisiert.

Die Erfindung betrifft weiterhin ein Verfahren zur Herstellung eines Faserverbundwerkstoffs, dadurch gekennzeichnet, dass man

i) die erfindungsgemäße polymerisierbare Zusammensetzung oder deren Einzelkomponenten a), b) und c) mit Fasern in Kontakt bringt und

ii) die resultierende Zusammensetzung bei einer Temperatur von 120 bis 200 °C, vorzugsweise bei 120 bis 180 °C, insbesondere bei 140 bis 160 °C behandelt.

Hierbei können die Fasern mit der polymerisierbaren Zusammensetzung auf verschiedenen Wegen in Kontakt gebracht werden.

1) Indem in eine beheizte, vorzugsweise mit einer Temperatur von 120 bis 200 °C, druckdichte Form Fasern, insbesondere textile-Verstärkungsstrukturen, eingelegt werden und mittels Überdruck die polymerisierbare Zusammensetzung hineingepresst wird, wobei die Faser vorzugsweise infiltriert wird und dann ggf. bei einer erhöhten Temperatur, vorzugsweise bei 140 bis 160 °C, die polymerisierbare Zusammensetzung polymerisiert.

2) Indem bei ansonsten gleichem Aufbau wie unter 1 an der druckdichten Form ein Vakuum angelegt wird und die erfindungsgemäße polymerisierbare Zusammensetzung eingesogen wird.

3) Durch eine Kombination von Unterdruck und Überdruck wie unter 1 und 2 die polymerisierbare Zusammensetzung in die Form überführt wird.

4) Indem die Herstellung in einem Extruder stattfindet, dessen Eingangsströme Fasern, insbesondere Kurzfasern, und die polymerisierbare Zusammensetzung enthalten, wobei der Extruder bei einer Temperatur oberhalb der Schmelztemperatur des aus der polymerisierbaren Zusammensetzung resultierenden Polymers betrieben wird.

5) Indem die Herstellung in einem Extruder stattfindet, dessen Eingangsströme eine oder mehrere Einzelkomponenten der erfindungsgemäßen polymerisierbaren Zusammensetzung in fester oder flüssiger Form und Fasern enthalten.

6) Indem die Herstellung durch klassisches Schleudergussverfahren stattfindet, wobei die erfindungsgemäße polymerisierbare Zusammensetzung oder deren Einzelkomponenten a), b) und c) in fester oder flüssiger Form eingetragen werden und mit Fasern, vorzugsweise in Form von Kurzfasern oder in Form von textilen Verstärkungsstrukturen, verstärkt werden.

7) Indem die Herstellung kontinuierlich durch Tränkung von Fasern, insbesondere von Geweben erfolgt, die nach Aufbringen der erfindungsgemäßen polymerisierbaren Zusammensetzung in flüssiger Form bei einer Temperatur von 120 bis 200°C polymerisiert wird, wodurch Composite Sheets, Organobleche, Profile oder Rohre aus endlosfaserverstärkten Polyamiden entstehen.

Bevorzugt wird die Alternative 1, 2 oder 3, wobei in eine beheizbare, druckdichte Form Fasern, insbesondere textile-Verstärkungsstrukturen eingelegt werden. Anschließend wird die polymerisierbare Zusammensetzung mittels Überdruck von 1 bis 150 bar und/oder bei einem Unterdruck der Form (Werkzeug) von 10 bis 900 mbar in die Form injiziert.

Nach vollständiger Füllung der Form mit der erfindungsgemäßen polymerisierbaren Zusammensetzung erfolgt die Polymerisation bei den oben genannten Temperaturen. Es entsteht direkt in der Form das Verbundbauteil.

Ebenfalls bevorzugt ist die obige Verfahrensweise, wobei in Abänderung an der druckdichten Form ein Unterdruck angelegt wird, vorzugsweise von 5 bis 800 mbar und die polymerisierbare Zusammensetzung in die Form gesogen wird und nach Befüllen der Form mit der polymerisierbaren Zusammensetzung bei der oben genannten Temperatur polymerisiert wird.

Vorteilhaft ist es weiterhin, dass die Polymerisation in einem klassischen Schleudergussverfahren ausgeführt wird, wobei die polymerisierbare Zusammensetzung in fester oder flüssiger Form in die Form eingetragen wird und die Fasern in Form von Kurzfasern oder in Form von zuvor ausgelegten textilen Verstärkungen eingebracht werden.

Bei der Herstellung der erfindungsgemäß polymerisierbaren Zusammensetzung, wie auch bei der erfindungsgemäßen Herstellung der faserverstärkten Verbundwerkstoffe, kann es vorteilhaft sein, den Anteil von an der Herstellung der polymerisierbaren Zusammensetzung oder des faserverstärkten Verbundwerkstoffs nicht beteiligten Komponenten so gering wie möglich zu halten. Dazu zählen speziell Wasser, Kohlendioxid und/oder Sauerstoff. In einer speziellen Ausführung sind daher die eingesetzten Komponenten und Apparaturen im Wesentlichen frei von Wasser, Kohlendioxid und/oder Sauerstoff. Eine Möglichkeit ist, dass die verwendete geschlossene Werkzeugkavität mit Vakuum beaufschlagt wird, bevor die Schmelze injiziert wird. Eine weitere zusätzliche Option ist das Verwenden von Inertgas, wie z. B. Stickstoff oder Argon. Die verwendete polymerisierbare Zusammensetzung wie auch die Füll- oder Verstärkungsstoffe (Fasern, wie textile Flächengebilde) können in Inertgasatmosphäre gelagert bzw. damit überlagert werden.

Fasern

Bevorzugt werden im erfindungsgemäßen Verfahren als Fasern Kurzfasern, Langfasern, Endlosfasern oder Mischungen davon eingesetzt.

Im Sinne der Erfindung haben "Kurzfasern" eine Länge von 0,1 bis 1 mm, "Langfasern" eine Länge von 1 bis 50 mm und "Endlosfasern" eine Länge von grösser als 50 mm. Endlosfasern werden zur Herstellung der faserverstärkten Verbundwerkstoffe, vorzugsweise in Form einer textilen Struktur, z. B. als Gewebe, Gewirke, Gestricke, Gelege oder Vliese eingesetzt. Bauteile mit gestreckten Endlosfasern erzielen in der Regel sehr hohe Steifigkeits- und Festigkeitswerte.

Für Vergussprozesse ist in der Regel die Verwendung von Kurzfasern bevorzugt.

Zur Herstellung flächiger Verbundplatten im RIM Verfahren wird i.A. als Fasermaterial ein aus parallel angeordneten Endlos-Garnen oder Endlos-Rovings, welche zu textilen Flächengebilden wie Gelegen, Tapes, Geflechten und Geweben u. ä. weiter verarbeitet wurden, eingesetzt.

Die vorstehend benannten textilen Faserstrukturen können ein- oder mehrlagig sowie in unterschiedlicher Kombination bezüglich textiler Flächengebilde, Faserarten und deren Fasermengen für die Bauteilherstellung verwendet werden. Bevorzugt werden Gelege, Multiaxial-Gelege, (Multiaxial-) Geflechte oder Gewebe eingesetzt, die aus zwei oder mehr als zwei, vorzugsweise 2 bis 9 Lagen bestehen.

Die eingesetzten Fasermaterialien enthalten als Fasern vorzugsweise solche aus anorganischen Mineralien wie Kohlenstoff, beispielsweise als Niedermodulcarbonfasern oder Hochmodulcarbonfasern, silikatische und nicht silikatische Gläser der verschiedensten Art, Bor, Siliciumcarbid, Metalle, Metalllegierungen, Metalloxide, Metallnitride, Metallcarbide und Silikate, sowie organische Materialien wie natürliche und synthetische Polymere, beispielsweise Polyacrylnitrile, Polyester, Polyamide, Polyimide, Aramide, Flüssig-kristallpolymere, Polyphenylensulfide, Polyetherketone, Polyetheretherketone, Polyether-imide, Baumwolle, Cellulose und andere Naturfasern, beispielsweise Flachs, Sisal, Kenaf, Hanf, Abaca. Bevorzugt sind hochschmelzende Materialien, beispielsweise Gläser, Kohlenstoff, Aramide, Flüssigkristallpolymere, Polyphenylensulfide, Polyetherketone, Polyetheretherketone und Polyetherimide, besonders bevorzugt sind Glasfasern, Kohlenstofffasern, Aramidfasern, Stahlfasern, Keramikfasern und/oder sonstige hinreichend temperaturbeständige polymere Fasern oder Fäden, die sich in der heißen aktivierten Schmelze nicht auflösen.

Fasern können in einer Menge von 5 bis 65 Vol.-%, bezogen auf den resultierenden Faserverbundwerkstoff, entsprechend beispielsweise bei Verwendung von Glasfasern 10 - 80 Gew.-%, eingesetzt werden, bevorzugt aber in einer Menge von 45-65 Vol.-%, bezogen auf den Faserverbundwerkstoff, wobei besonders bevorzugte Fasern Glasfasern oder Kohlefasern sind.

Das erfindungsgemäße Verfahren ermöglicht in Verbindung mit den Verstärkungsfasern bei der Polymerisation sehr geringen Volumenschrumpf, geringe Restmonomergehalte der beteiligten Lactame, eine gute Imprägnierung der Verstärkungsfasern, wirtschaftlich akzeptablen Polymerisationszeiten und die Bildung von Produkten mit guten mechanischen Eigenschaften.

Die Erfindung betrifft auch die Verwendung der erfindungsgemäßen polymerisierbaren Zusammensetzung für Vergussprozesse, insbesondere zur Fixierung und/oder zum mechanischen Schutz von Kabelbündeln oder zum Vergießen von Teilen von Elektromotoren, die insbesondere Strom-führende Komponenten beinhalten.

Bevorzugt ist die obige Verwendung sofern die polymerisierbare Zusammensetzung dabei in Gegenwart von Fasern zur Herstellung eines Faserverbundwerkstoff eingesetzt wird.

**Beispiele:**

Die in Tabelle 1 spezifizierte Gesamtmasse aus Caprolactam und Laurinlactam wird in zwei gleich große Massen aufgeteilt, um unabhängig voneinander die Aktivator-Schmelze und die Katalysator-Schmelze zu bereiten:

Katalysatorschmelze:

180 g eines in der Tabelle 1 spezifizierten Gemisches aus Caprolactam und Laurinlactam und 20 g Addonyl Kat NL (18,5 Gew.-%iges Natriumcaprolactamat in Caprolactam, CAS-Nr. 2123-24-2), welches von der Firma Rhein Chemie Rheinau GmbH kommerziell verkauft wird, werden in einem Dreihalskolben vorgelegt.

Aktivatorschmelze:

180 g eines in der Tabelle 1 spezifizierten Gemisches aus Caprolactam und Laurinlactam werden mit 8.0 g Addonyl 8120 in einem zweiten Dreihalskolben vorgelegt. Bei Addonyl 8120 handelt es sich um ein beidseitig Caprolactam-geblocktes Hexamethylendiisocyanat, konkret um N,N'-Hexan-1,6-diylbis(hexahydro-2-oxo-1H-azepine-1-carboxamid), CAS Nr.: 5888-87-9.

Der Inhalt beider Kolben wurde in auf 150 °C vorgeheizten Ölbädern aufgeschmolzen, dann auf 110°C temperiert. Anschließend wurde bei dieser Temperatur für 10 Minuten evakuiert. Dann wurden beide Kolben mit Stickstoff befüllt und die Ölbäder entfernt.

Zur Polymerisation der aktivierten Schmelzen wurden beide Schmelzen in ein offenes und mit Stickstoff überschleiertes Becherglas gegeben und mit einem Glasrührstab die Schmelzen vermischt; das Becherglas wurde mit Hilfe eines auf 160°C temperierten Ölbads erwärmt.

**Tabelle 1**: Verwendete Polymerisationsrezepturen, damit erzielte Dichten sowohl der aktivierten Schmelzen als auch der resultierenden Polymere. Darüber hinaus sind die Restmonomergehalte an Caprolactam und Laurinlactam aufgelistet. Die Bestimmung der Polymerdichte erfolgte entsprechend DIN EN ISO 1183, die Bestimmung der Restmonomergehalte (RMG) via GC entsprechend DIN EN ISO 11337:

| | Caprolactam /g | Laurinlactam /g | Dichte der teilaktivierten* Schmelze bei 150°C /g·ml$^{-1}$ | Polymerdichte bei 23°C /g·ml$^{-1}$ | Polymerdichte bei 150°C /gel$^{-1}$ | RMG Caprolactam Gew.-% | RMG Laurin-lactam Gew.-% |
|---|---|---|---|---|---|---|---|
| VGBA | 360 | / | 0,971 | 1,143 | 1,071 | 1,0 | 0 |
| EFG 1 | 320 | 40 | 0,963 | 1,109 | 1,037 | 1,0 | 0 |
| EFG 2 | 280 | 80 | 0,960 | 1,084 | 1,026 | 1,8 | 0,4 |
| EFG 3 | 240 | 120 | 0,954 | 1,066 | 1,002 | 2,2 | 0,3 |
| EFG 4 | 200 | 160 | 0,945 | X | X | X | X |
| VGB B | 160 | 200 | / | X | X | X | X |
| VGB C | 120 | 240 | / | X | X | X | X |
| VGB D | 80 | 280 | / | X | X | X | X |
| VGB E | 40 | 320 | / | X | X | X | X |
| VGB F | / | 360 | / | X | X | X | X |

VGB: Vergleichsbeispiel; EFG: erfindungsgemäß;

X: Polymerisation startet unmittelbar nach dem Vermischen von Katalysator- und Aktivator-schmelze, daher können die vereinigten Schmelzen nicht in das zur Auspolymerisation vorgesehene Gefäß überführt werden

**Tabelle 2:** Berechneter Volumenschrumpf (Schrumpf) aus den Dichtewerten

Schrumpf A: Dichte- und damit Volumenänderung der bei 150°C geschmolzenen, aktivierten Lactamschmelze im Verhältnis zum gebildeten Polymer bei 23°C

$$\text{Volumenschrumpf in Prozent} = (1 - \text{Dichte der polymerisierbaren Lactamschmelze bei } 150°\text{C}/\text{Dichte des erhaltenen Polymers bei Raumtemtemperatur } 23°\text{C}) \times 100$$

Schrumpf B: Dichte- und damit Volumenänderung der bei 150°C geschmolzenen, aktivierten Lactamschmelze im Verhältnis zum gebildeten Polymer bei ebenfalls 150°C (nach der Herstellung auf Raumtemperatur abgekühlt und zur Dichtebestimmung erneut auf 150°C erwärmt).

$$\text{Volumenschrumpf in Prozent} = (1 - \text{Dichte der polymerisierbaren Lactamschmelze bei } 150°\text{C} / \text{Dichte des erhaltenen Polymers bei } 150°\text{C}) \times 100$$

|  | Schrumpf A /% | Schrumpf B /% |
|---|---|---|
| VGBA | 15,0 | 9,3 |
| EFG 1 | 13,2 | 7,1 |
| EFG 2 | 11,4 | 6,4 |
| EFG 3 | 10,5 | 4,8 |

**Fazit:**

Der Volumenschrumpf bei der Umwandlung der aktivierten Caprolactamschmelze zum Polymer bei 150°C konnte durch die Anwesenheit von bis zu etwa 30 Gew.-% Laurinlactam deutlich reduziert werden. Höhere Laurinlactamanteile (ab 40 Gew.-%) waren mit der beschriebenen Vorgehensweise nicht mehr handhabbar.

**Patentansprüche**

**1.**   Polymerisierbare Zusammensetzung, enthaltend

a) ein zyklisches Amid aus einer Mischung von Laurinlactam und Caprolactam, wobei die Menge an Laurinlactam 10 bis 35 Gew.-%, bezogen auf die Gesamtmenge an zyklischem Amid beträgt,
b) wenigstens einen Aktivator, sowie
c) wenigstens einen Katalysator zur Polymerisation der zyklischen Amide.

**2.**   Polymerisierbare Zusammensetzung nach Anspruch 1, **dadurch gekennzeichnet, dass** als Aktivator wenigstens eine Verbindung ausgewählt aus der Gruppe der Isocyanate, Uretdione, Carbodiimide, Säureanhydride, Säurehalogenide oder deren Umsetzungsprodukte mit dem Monomer eingesetzt wird.

**3.**   Polymerisierbare Zusammensetzung nach wenigstens einem der vorangegangenen Ansprüche 1 bis 2, enthaltend als Aktivator wenigstens ein geblocktes Isocyanat, insbesondere ein mit einem zyklischen Amid geblocktes Diisocanat, insbesondere Caprolactam geblockes Hexamethylendiisocyanat.

**4.**   Polymerisierbare Zusammensetzung nach wenigstens einem der vorangegangenen Ansprüche 1 bis 3, enthaltend wenigstens einen Katalysator c) zur Polymerisation der cyclischen Amide ausgewählt aus der Gruppe, bestehend aus Natriumcaprolactamat, Kaliumcaprolactamat, Bromid-Magnesiumcaprolactamat, Chlorid-Magnesium-caprolactamat, Magnesium-bis-Caprolactamat, Natriumhydrid, Natrium, Natrium-hydroxid, Natriummethanolat, Natriumethanolat, Natriumpropanolat, Natriumbutanolat, Kaliumhydrid, Kaliumhydroxid, Kaliummethanolat, Kaliumethanolat, Kaliumpropanolat und Kalium-butanolat, bevorzugt aus der Gruppe bestehend aus Natriumhydrid, Natrium und Natriumcaprolactamat, besonders bevorzugt Natrium-caprolactamat.

5. Polymerisierbare Zusammensetzung nach wenigstens einem der vorangegangenen Ansprüche 1 bis 4, enthaltend wenigstens Natrium-caprolactamat als Katalysator c) zur Polymerisation des cyclischen Amids.

6. Verfahren zur Herstellung einer polymerisierbaren Zusammensetzung nach wenigstens einem der vorangegangenen Ansprüche 1 bis 5, **dadurch gekennzeichnet, dass** man eine Mischung zyklischer Amide der Komponente a) mit einem Aktivator der Komponente b) und wenigstens einen Katalysator der Komponente c) in Kontakt bringt.

7. Verfahren gemäß Anspruch 6, **dadurch gekennzeichnet, dass** man eine Aktivatormischung enthaltend zyklische Amide der Komponente a) und wenigstens einem Aktivator der Komponente b) mit einer Katalysatormischung, enthaltend zyklische Amide der Komponente a) und wenigstens einem Katalysator der Komponente c) in Kontakt bringt.

8. Verfahren zur Herstellung einer Polymermatrix, **dadurch gekennzeichnet, dass** man die polymerisierbare Zusammensetzung gemäß wenigstens einem der Ansprüche 1 bis 5 bei einer Temperatur von 120 bis 200 °C behandelt.

9. Verfahren zur Herstellung eines Faserverbundwerkstoffs, **dadurch gekennzeichnet, dass** man

   i) die polymerisierbare Zusammensetzung gemäß wenigstens einem der Ansprüche 1 bis 5 oder deren Einzelkomponenten a), b) und c) mit Fasern in Kontakt bringt und
   ii) die resultierende Zusammensetzung bei einer Temperatur von 120 bis 200 °C behandelt.

10. Polymermatrix, insbesondere ein Faserverbundwerkstoff erhältlich nach dem Verfahren gemäß Anspruch 7 oder 8.

11. Verwendung der polymerisierbaren Zusammensetzung gemäß wenigstens einem der Ansprüche 1 bis 5 für Vergussprozesse, insbesondere zur Fixierung und/oder zum mechanischen Schutz von Kabelbündeln oder zum Vergießen von Teilen von Elektromotoren, die insbesondere Strom-führende Komponenten beinhalten.

12. Verwendung gemäß Anspruch 11, **dadurch gekennzeichnet, dass** die polymerisierbare Zusammensetzung in Gegenwart von Fasern zur Herstellung eines Faserverbundwerkstoff eingesetzt wird.

**Europäisches Patentamt**

**European Patent Office**

**Office européen des brevets**

# EUROPÄISCHER RECHERCHENBERICHT

Nummer der Anmeldung

EP 16 19 2727

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 22 37 003 A1 (CESKOSLOVENSKA AKADEMIE VED) 15. Februar 1973 (1973-02-15) * Ansprüche; Beispiel 5 * ----- | 1-12 | INV. C08G69/18 |
| X | EP 0 755 966 A1 (INVENTA AG [CH]) 29. Januar 1997 (1997-01-29) * Seite 7, Zeile 10 - Zeile 20; Beispiel 5 * <br> * Ansprüche * ----- | 1-12 | |
| A | FR 2 910 900 A1 (ARKEMA FRANCE [FR]) 4. Juli 2008 (2008-07-04) ----- | 1-12 | |

**RECHERCHIERTE SACHGEBIETE (IPC)**

C08G

Der vorliegende Recherchenbericht wurde für alle Patentansprüche erstellt

| Recherchenort | Abschlußdatum der Recherche | Prüfer |
|---|---|---|
| München | 10. April 2017 | West, Nuki |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 19 2727

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-04-2017

| Im Recherchenbericht angeführtes Patentdokument | Datum der Veröffentlichung | Mitglied(er) der Patentfamilie | Datum der Veröffentlichung |
|---|---|---|---|
| DE 2237003 A1 | 15-02-1973 | CA 997099 A | 14-09-1976 |
| | | CH 572501 A5 | 13-02-1976 |
| | | DD 97433 A1 | 14-05-1973 |
| | | DE 2237003 A1 | 15-02-1973 |
| | | EG 11277 A | 31-01-1977 |
| | | FR 2147248 A1 | 09-03-1973 |
| | | GB 1360899 A | 24-07-1974 |
| | | HU 165502 B | 28-09-1974 |
| | | IT 963407 B | 10-01-1974 |
| | | JP S4934594 A | 30-03-1974 |
| | | NL 7210307 A | 30-01-1973 |
| EP 0755966 A1 | 29-01-1997 | AT 210697 T | 15-12-2001 |
| | | CA 2182052 A1 | 26-01-1997 |
| | | DE 19527154 A1 | 06-02-1997 |
| | | EP 0755966 A1 | 29-01-1997 |
| | | JP 3466821 B2 | 17-11-2003 |
| | | JP H09202854 A | 05-08-1997 |
| | | US 5837181 A | 17-11-1998 |
| FR 2910900 A1 | 04-07-2008 | AU 2007344279 A1 | 24-07-2008 |
| | | BR PI0720716 A2 | 25-02-2014 |
| | | CN 101578319 A | 11-11-2009 |
| | | EP 2125932 A2 | 02-12-2009 |
| | | FR 2910900 A1 | 04-07-2008 |
| | | JP 5394254 B2 | 22-01-2014 |
| | | JP 2010514876 A | 06-05-2010 |
| | | KR 20090103892 A | 01-10-2009 |
| | | RU 2009128969 A | 10-02-2011 |
| | | US 2010113661 A1 | 06-05-2010 |
| | | WO 2008087335 A2 | 24-07-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3730504

**In der Beschreibung aufgeführte Nicht-Patentliteratur**

- *Sächtling Kunststoff Taschenbuch,* 2013, ISBN 978-3-446-43442-4, 554

- **P. WAGNER.** *Kunststoffe,* 1983, vol. 73 (10), 588-590
- *CHEMICAL ABSTRACTS,* 5888-87-9